Europäisches Patentamt

European Patent Office

Office européen des brevets

(11) Publication number: **0 518 505 A1**

# EUROPEAN PATENT APPLICATION

(21) Application number: **92304556.1**

(22) Date of filing: **20.05.92**

(51) Int. Cl.⁵: **B28B 13/06**, B65G 47/90

(30) Priority: **12.06.91 GB 9112659**

(43) Date of publication of application:
**16.12.92 Bulletin 92/51**

(84) Designated Contracting States:
**PT**

(71) Applicant: **CHLORIDE SILENT POWER LIMITED**
**Davy Road Astmoor Industrial Estate**
**Runcorn Cheshire, WA7 1PZ(GB)**

(72) Inventor: **Atherton, Glyn**
**17 Minton Way**
**Widnes, Cheshire WA8 9OY(GB)**
Inventor: **Sutton, John Martin**
**41 Country Road**
**Ormskirk, Lancashire L39 1OG(GB)**

(74) Representative: **Cross, Rupert Edward Blount**
**et al**
**BOULT, WADE & TENNANT 27 Furnival Street**
**London EC4A 1PO(GB)**

(54) **Apparatus for producing tubular unsintered ceramic compacts.**

(57) An apparatus for producing tubular unsintered ceramic compacts includes a cylindrical mandrel and means for forming a compact on the mandrel. There is also provided a removal station (40) and holding means to hold the mandrel in the removal station (40) for removal of the compact (56) from the mandrel (19). The removal station includes an annular member (60) axially aligned with the mandrel (19) when in the holding means and an elastic cuff member (66) mounted inside the annular member (60) to define an annular chamber. Actuating means are arranged to produce axial movement of the annular member (60) and the mandrel (19) relative to one another between an engagement position, with the mandrel (19) extending through the annular member, and a non-engagement position, with the annular member (60) clear of the mandrel (19). Pressurizing means are provided for selectively applying differential pressure between the inside and the outside of the annular chamber (60) to deform the cuff member (66) between a gripping state, in which the cuff member can grip a compact (56) on the mandrel (19) when in said engagement position, and a non-gripping state. Control means are provided to control operation of the removal station (40). The actuating means moves the annular member (60) and the mandrel (19) to the engagement position whilst the pressurizing means has the cuff member (66) in the non-gripping state. The pressurizing means then grips the compact (56) on the mandrel (19) and the actuating means is operated to withdraw the compact (56) from the mandrel (19).

FIG. 4.

The present invention relates to an apparatus for producing tubular unsintered ceramic compacts.

The production of ceramic articles, such as tubular or cup-shaped articles, by a two-stage process is known in the art. In a first stage, an article to be produced is formed from a powder, such as beta alumina. The formed article is then sintered at an elevated temperature to produce a ceramic article of the required shape and properties. Ceramic articles may be used in a variety of applications. Beta alumina cup-shaped bodies, for example, are used as solid electrolytes to separate the liquid sodium and sulphur electrodes in a sodium sulphur electrochemical cell.

The unsintered article, produced from powder by a forming process, is commonly known as a "compact" or a "green shape". A compact may be formed from a powder by a process such as isostatic pressing or electrophoretic deposition. An apparatus for use in an electrophoretic deposition process is disclosed in WO89/04749 (Chloride Silent Power Limited). In the production of tubular ceramic articles, which may be closed at one end to produce a cup-shaped body, the compact is formed around a mandrel.

Those skilled in the art will appreciate that an unsintered ceramic compact can hold its shape due to cohesion between the particles of the powder. This cohesion may be due to the presence of a small amount of binder. However, the cohesion between the particles in an unsintered ceramic compact is not great and so the compact is relatively fragile and requires delicate handling.

A further problem may arise due to adhesion between the compact and the surface of the mandrel, even after the compact has been dried following an electrophoretic deposition process. A certain amount of force may need to be applied to remove a compact from a mandrel.

The present invention provides apparatus for producing tubular unsintered ceramic compacts, the apparatus including:

a cylindrical mandrel;

means for forming a compact on the mandrel;

a removal station;

and holding means to hold the mandrel in the removal station for removal of the compact from the mandrel;

wherein the removal station comprises:

an annular member axially aligned with the mandrel when in the holding means;

an elastic cuff member mounted inside the annular member to define an annular chamber;

actuating means arranged to produce axial movement of the annular member and the mandrel relative to one another between an engagement position, with the mandrel extending through the annular member, and a non-engagement position, with the annular member clear of the mandrel;

pressurizing means for selectively applying differential pressure between the inside and the outside of the annular chamber to deform the cuff member between a gripping state, in which the cuff member can grip a compact on the mandrel when in said engagement position, and a non-gripping state;

and control means for operating the actuating means to move the annular member and the mandrel to said engagement position whilst the pressurizing means has the cuff member in said non-gripping state, then operating the pressurizing means to grip the compact on the mandrel and furthe operating the actuating means to withdraw the compact from the mandrel.

The provision of an elastic cuff member mounted inside an annular member to define an annular chamber allows a controlled pressure to be applied to a compact so that the cuff member can grip a compact to apply a force to withdraw the compact from the mandrel.

The apparatus of the present invention has the further advantage of ensuring a purely axial motion of the compact relative to the mandrel as the compact is removed. With removal of a compact by hand, it is difficult to avoid an involuntary twisting action of the hand, and hence of the compact relative to the mandrel, which can lead to damage or cracking of the fragile compact, especially if done rapidly. The incidence of compact damage on removal has been found to be significantly lower with the apparatus of the present invention as compared with removal of the compact by hand.

Preferably, the pressurizing means is arranged for selectively reducing the pressure inside the annular chamber below the pressure outside the chamber to deform the cuff member to said non-gripping state. Advantageously, the pressurizing means is arranged for selectively increasing the pressure inside the annular chamber to a pressure no greater than the pressure outside the chamber and the cuff member is dimensioned to be deformed to said gripping state when the pressure inside the annular chamber is at a pressure no greater than the pressure outside the annular chamber.

In a particularly preferred embodiment, the pressurizing means is arranged for applying zero differential pressure between the inside and the outside of the chamber and the cuff member is dimensioned to be deformed to said gripping state at said zero differential pressure whereby the pressure applied by the cuff member in said gripping state to a compact is determined by the deformation of the cup member effected by the compact.

It has been appreciated that the compacts are most prone to being broken if the pressure applied thereto is uneven so that the pressure being applied is localized. The preferred embodiment of the present invention, mentioned in the previous paragraph, alleviates the problem of localized pressure because the pressure applied to the compact is determined not by the application of an external pressure, which may be uneven or cause uneven deformation of the cuff member, but by the strain produced in the cuff member due to deformation of the cuff member effected by the compact.

Advantageously, the cuff member includes a gripping region for gripping the compact when the cuff member is in the gripping state, the gripping region being of uniform thickness. This preferred feature is particularly advantageous in alleviating the problem of localised pressure.

The cuff member may be configured to include an elongate portion for gripping the side wall of the compact and a stepped portion for contacting the end surface of the side wall of the compact. Accordingly, the purchase of the cuff member when the compact is in the gripping state may be improved. Advantageously, at least one of the elongate portion and the stepped portion is of uniform thickness.

In an apparatus according to the present invention for producing tubular unsintered ceramic compacts each having a closed end, the control means may include means for controlling the rate of operation of the actuating means, during withdrawal of the compact from the mandrel, to a speed sufficiently slow to permit equalization of any differential pressure across the compact. It will be appreciated that, as the compact is withdrawn from the mandrel, the space between the mandrel and the compact may be at a very low pressure. Accordingly, a differential pressure may appear across the end of the compact unless the speed of withdrawal of the compact from the mandrel is sufficiently slow to allow the external atmosphere to enter into the aforementioned space, eg. by diffusion through the wall of the compact or through any gap between the side wall of the compact and the mandrel, to equalize any differential pressure across the compact.

The apparatus accordingly to the present invention is particularly applicable when said means for forming a compact on the mandrel comprises means for depositing the compact on the mandrel by an electrophoretic deposition process.

Embodiments of the present invention will now be described, by way of example only, and with reference to the accompanying drawings in which:

Figure 1 shows an electrophoretic deposition apparatus for forming a compact on a mandrel;

Figures 2 and 3 show schematic views of an embodiment of a removal station for use in the apparatus of the present invention;

Figure 4 shows a cross-sectional view of a gripping mechanism forming part of the removal station of Figures 2 and 3;

and Figure 5 shows a view along the line V-V of a cuff member 66 forming part of the gripping mechanism of Figure 4.

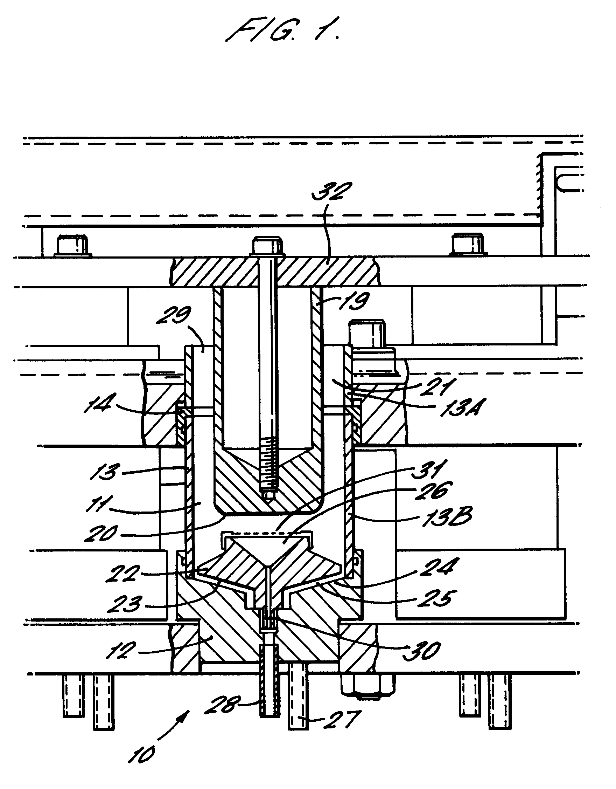

The apparatus of Figure 1 is an electrophoretic deposition apparatus for use in producing a cup-shaped body and, in particular, a cup-shaped beta alumina body for use in a sodium sulphur electrochemical cell. The apparatus is described, in detail, in WO89/04749.

The electrophoretic deposition apparatus 10 includes a chamber 11 defined by a base member 12 and a cylindrical side wall member 13, both of metal. The side wall member 13 is formed of upper and lower portions 13A, 13B which are electricaly isolated, from each other by an interposed annular insulating member 14. The free end of the lower wall portion 13B is received in the base member 12. A cylindrical metal mandrel 19 projects downwardly into the chamber 11 through the open top thereof (defined by the free end of the upper wall portion 13A). The end face 20 of the mandrel 19 is directed towards the bottom of the chamber 11. The mandrel 19 and the chamber wall 13 together define an annular space 21 therebetween.

A flow controlling member 22 is provided in the base member 12. The lower surface 23 of the flow controlling member 22 is conical and faces a conical surface 24 in the base member 12. The conical surfaces 23, 24 define a conical annular space 25 therebetween. A conical depression 26 is provided in the upper surface of the flow controlling member 22. The mouth of the depression 26 extends over substantially the whole area of the end face 20 of the mandrel 19.

Slurry is pumped into the chamber 1 through a pipe 27 which is connected to the space 25 between the space member 12 and the flow controlling member 22 by a passageway (not shown) in the base member 12. Two outlets are provided for the slurry, an outlet 28 below the flow controlling member 22 and an outlet 29 between the upper wall portion 13A of the chamber wall 13 and the mandrel 19.

Some of the slurry entering the chamber flows up the space 21 between the mandrel 19 and the chamber wall 13 and flows out of the chamber through the outlet 29. Some slurry flows from the space 25 into the depression 26 and thus out of the chamber 11 through a passageway 30 in the base member 12 and the pipe 28. A metal mesh member 31 is secured over the mouth of the depression 26 to assist the flow of slurry across the end face 20 of the mandrel 19.

The upper and lower portions 13A, 13B of the chamber wall 13, the mesh member 31 and the mandrel 19 are held at appropriate electrical potentials such that material from a slurry flowing through the chamber is deposited onto the surface of the mandrel 19. Accordingly, a cup-shaped body is formed from the particles of the slurry as the slurry flows through the chamber. The electrical isolation of the portions 13A and 13b allows the portions to be maintained at their respective electrical potentials for different times. If the upper wall portion 13A is maintained at the appropriate potential for a longer period of time, the free end of the cup-shaped body, so produced, is thicker than the rest of the cup-shaped body. This thicker free end can be subsequently machined as necessary.

For the production of beta alumina bodies for use as a solid electrolyte in a sodium sulphur cell, the slurry supplied to the apparatus of Figure 1 comprises a suspension of beta alumina in amyl alcohol. Accordingly, the compact formed on the mandrel 19 is a compact of beta alumina particles.

A plurality of electrophoretic deposition apparatus 10 may be arranged together with their mandrels 19 electrically and mechanically interconnected by a plate member 32.

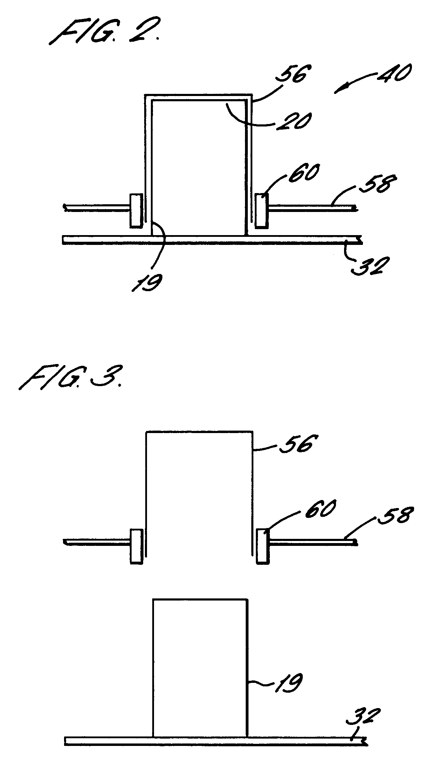

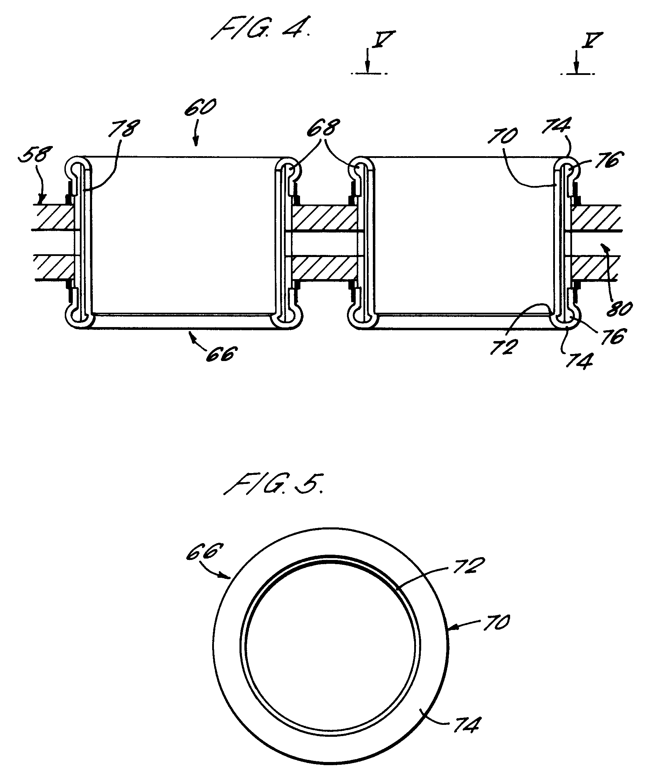

Once the compacts have been formed on the mandrels 19, they can be removed from the respective mandrels 19 at a removal station shown schematically in Figures 2 and 3.

A plate member 32 carrying a plurality of mandrels 19 is fed into a removal station 40. The mandrels 19 are orientated with their end faces 20 uppermost so that the weight of the compacts 56 is supported by the respective mandrels 19. Transport of the mandrels 19 and compacts 56 in this manner prevents the compacts 56 from falling off the mandrels 19 in an uncontrolled manner.

The mandrel plate member 32 is positioned in the removal station 40 to be aligned with a plate member 58 carrying mechanisms 60 for gripping the compacts 56 on the mandrels 19. (For ease of illustration, only one mandrel 19 and one gripping mechanism 60 is shown.) The mandrel plate member 32 is both located in position and held down by means of four bolts (not shown) which are fired from fixed positions just above the plate member 32 into holes at each corner of the plate member 32. Shafts are provided at each corner of the gripping plate member 58 to effect relative movement of the mandrels 19 and the gripping mechanisms 60 between an engagement position and a non-engagement position. In the engagement position, shown in Figure 2, the gripping mechanisms 60 surround the mandrels 19. In the non-engagement position, shown in Figure 3, the gripping mechanisms are clear of the mandrels 19. Each gripping mechanism 60 can be operated between a gripping state for gripping the compact on the mandrel when in the engagement position and a non-gripping state.

When the mandrel plate member 32 has been located in the removal station 40, the gripping plate member 58 is lowered into an engagement position on the mandrel plate member 32 so that each gripping mechanism 60 surrounds a respective mandrel 19 as shown in Figure 2. Relative movement of a gripping mechanism 60 and a compact 56 is possible because the gripping mechanism 60 is in the non-gripping state. The gripping mechanisms 60 are then operated to grip the respective compacts 56.

The compacts 56 are then slowly withdrawn from the mandrel 19 by controlled movement of the gripping plate member 58 from an engagement position to the non-engagement position shown in Figure 3. Movement of the gripping plate member 58 is controlled to be sufficiently slow to permit equalisation of any differential pressure across the compact. Although, removal of the compacts produces an upward force on the mandrels and the mandrel plate member 32, the mandrel plate member 32 is held stationary by means of the four fired bolts in respective corners of the plate member 32.

The compacts can then be lowered onto a conveyor which includes mandrel-shaped foam supports for supporting the compacts 56. The gripping mechanisms 60 are then operated to a non-gripping state to release the compacts 56. The gripping plate member 58 carrying the gripping mechanisms 60 is then raised slightly so that the compacts 56 can be transported away from the removal station 40. As the compacts are being handled with their closed ends uppermost, any debris produced during the manufacturing process will fall out as the compacts are removed from the mandrels and so be easily removed.

Meanwhile, the mandrel plate member 32 is fed through the removal station 40 and away to a cleaning station at which the mandrels 19 can be cleaned.

The gripping mechanism 60 is shown in more detail in Figure 4. An elasic cuff member 66 is mounted on an annular support sleeve 68. As shown also in Figure 5, the cuff member 66 comprises an elongate annular portion 70 with a stepped portion 72 at one end of the elongate portion 70.

The purpose of the stepped portion 72 is to provide some degree of support and upward force on the open end of the compact while it is being removed from the mandrel. Such support avoids relative slippage between the cuff member 66 and the compact as the compact is being withdrawn and alleviates possible damage to the compact if there is any adhesion between the compact and the mandrel.

At either end of the cuff member 66 is provided an end portion 74 which is arranged to be drawn over a respective flange 76 on the support sleeve 68. The cuff member 66 and support sleeve 68 are dimensioned and configured to define an annular chamber 78 therebetween. The pressure in the annular chamber 78 can be controlled via a passage 80 to which a pump (not shown) is attached, to apply a differential pressure across the elongate portion 70 of the cuff member 66. By application of a differential pressure across portions of the cuff member 66, the cuff member 66 can be moved between a gripping state in which the cuff member is dimensioned to grip a compact on a mandrel and a non-gripping state.

In the embodiment of Figure 4, the undeformed configuration of the cuff member 66 is with a cylindrical elongate region 70, a stepped region 72 and end portions 74 having a diameter smaller than the diameter of the flanges 76 of the support sleeve. Accordingly, when the cuff member 66 is fitted over the flanges 76 of the support sleeve 68, the cuff member 66 is deformed to define an annular chamber 78 which extends at least along the length of the elongate region 70 and the stepped region 72. Accordingly, the diameter of the elongate region 70 and the stepped region 72 may be increased, along its entire length, by reducing the pressure in the chamber 74 and so applying a differential pressure across the cuff member 66.

In a particularly advantageous embodiment, the elongate region 70 of the cuff member 66 is dimensioned to grip a compact when zero differential pressure is applied across the cuff member 66. Accordingly, the non-gripping state of the cuff member 66 is effected by reducing the pressure in the chamber 78. It will be appreciated that the pressure in the chamber must be reduced sufficiently for the stepped region 72 not to contact the compact when the cuff member is in a non-gripping state. It will further be appreciated that the dimensions of the cuff member 66 and support sleeve 68 are directly related to the dimensions of a mandrel on which a compact is to be formed and the resulting compact. An example is given in Table 1.

Table 2 shows the operation of a removal station, indicating the various stages in the removal of a compact from a mandrel.

## TABLE 1

### EXAMPLE 1

| Dimensions of Compact (mm) | | Dimensions of Mandrel (mm) | |
|---|---|---|---|
| External diameter of body | 41 | Diameter | 37.0 |
| External diameter of open end | 43 | Axial length | 73 |
| Axial length | 37.5 | | |
| Thickness of wall of body | 2 | Dimensions of Support Sleeve (mm) | |
| Thickness of wall of open end | 3 | Internal diameter | 48 |
| | | Axial length | 38 |

Dimensions of Cuff Member (mm)

| | Unstressed | Non-Gripping State | Gripping State |
|---|---|---|---|
| Internal diameter of elongate region | 40 | 45 | 41 |
| Axial length of elongate region | 35 | 35 | 35 |
| Internal diameter of stepped region | 38 | 45 | 38 |
| Axial length of stepped region | 6 | 6 | 6 |
| Radial dimension of chamber 78 | 2.5 to 3.5 | 0 | 2.5 to 3.5 |

Differential Pressure Across Cuff Member

Non-gripping state    minus 2.5 p.s.i.

Gripping state        0 to 0.5 p.s.i.

Material of Cuff Member:  Neoprene (soft rubber)

TABLE 2

| OPERATION OF REMOVAL STATION | | |
|---|---|---|
| Stage | State of Gripping Mechanism | Relative Position of Mandrel and Gripping Mechanism |
| 1. Mandrel fed to removal station | Non-gripping | Non-engagement (1) |
| 2. Gripping mechanism lowered onto mandrel | Non-gripping | From non-engagement (1) to engagement |
| 3. Pressure in chamber 78 increased to ambient pressure | From non-gripping to gripping | Engagement |
| 4. Compact withdrawn from mandrel and lowered onto a foam support by relative movement of mandrel and gripping mechanism | Gripping | From engagement to non-engagement (2) |
| 5. Pressure in chamber 78 reduced to release compact which is now supported by foam support | From gripping to non-gripping | Non-engagement (2) |
| 6. Gripping mechanism raised clear of compact | Non-gripping | Non-engagement (1) |
| 7. Compact removed from station. Mandrel removed to a cleaning station. | | |

The removal station may be adjustable for speed of withdrawal of compact from the mandrel, and different engagement and non-engagement positions to cater for different lengths of compact. Means may be provided on the conveyor belt to support the compacts, depending on the size of the compacts, to prevent them from falling over when the conveyor belt is being indexed out. The compacts are transported a short distance from the removal station to an unloading station where the compacts may be transferred (manually) onto trays for further processing.

Control of the removal station 40 in the defined sequence of operations may be effected by servomotors or other means known to those skilled in the art. It will be appreciated that any automatic operation of the removal station 40 may require sensors to ensure that actions effected by the removal station have been effected correctly.

Modifications to the embodiments described within the scope of the present invention will be apparent to those skilled in the art.

**Claims**

1. Apparatus for producing tubular unsintered ceramic compacts, the apparatus including:

    a cylindrical mandrel;

    means for forming a compact on the mandrel;

    a removal station;

    and holding means to hold the mandrel in the removal station for removal of the compact from the mandrel;

    wherein the removal station comprises:

    an annular member axially aligned with the mandrel when in the holding means;

    an elastic cuff member mounted inside the annular member to define an annular chamber;

    actuating means arranged to produce axial movement of the annular member and the mandrel relative to one another between an engagement position, with the mandrel extending through the annular member, and a non-engagement position, with the annular member clear of the mandrel;

    pressurizing means for selectively applying differential pressure between the inside and the outside of the annular chamber to deform the cuff member between a gripping state, in which the cuff member can grip a compact on the mandrel when in said engagement position, and a non-gripping state;

    and control means for operating the actuating means to move the annular member and the mandrel to said engagement position whilst the pressurizing means has the cuff member in said non-gripping state, then operating the pressurizing means to grip the compact on the mandrel and further operating the actuating means to withdraw the compact from the mandrel.

2. Apparatus according to Claim 1 wherein the pressurizing means is arranged for selectively reducing the pressure inside the annular chamber below the pressure outside the chamber to deform the cuff member to said non-gripping state.

3. Apparatus according to Claim 2 wherein the pressurizing means is arranged for selectively increasing the pressure inside the annular chamber to a pressure no greater than the pressure outside the chamber and the cuff member is dimensioned to be deformed to said gripping state when the pressure inside the annular chamber is at a pressure no greater than the pressure outside the chamber.

4. Apparatus according to Claim 3 wherein the pressurizing means is arranged for applying zero differential pressure between the inside and the outside of the diameter and the cuff member is dimensioned to be deformed to said gripping state at said zero differential pressure whereby the pressure applied by the cuff member in said gripping state to a compact is determined by the deformation of the cuff member effected by the compact.

5. Apparatus according to any one of the preceding claims wherein the cuff member is dimensioned so that the strain in the elastic member is less when the cuff member is in said gripping position than when the cuff member is in said non-gripping position.

6. Apparatus according to any one of the preceding claims wherein the cuff member includes a gripping region for gripping a compact when the cuff member is in the gripping state, the gripping region being of uniform thickness.

7. Apparatus according to any of Claims 1 to 5 wherein the cuff member includes an elongate portion for gripping the side wall of the compact and a stepped portion for contacting the end surface of the side wall of the compact.

8. Apparatus according to Claim 7 wherein the elongate portion is of uniform thickness.

9. Apparatus according to Claims 7 or 8 wherein the stepped portion is of uniform thicknes.

10. Apparatus according to any one of the preceding claims for producing tubular unsintered ceramic compacts each having a closed end, the control means includes means for controlling the rate of operation of the actuating means during withdrawal of the compact from the mandrel to a speed sufficiently slow to permit equalisation of any differential pressure across the compact.

11. Apparatus according to any one of the preceding claims wherein said means for forming a compact on the mandrel comprises means for depositing the compact on the mandrel by an electrophoretic deposition process.

FIG. 1.

FIG. 2.

FIG. 3.

FIG. 4.

FIG. 5.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| X | DE-A-2 600 290 (RICH. SEIFERT & CO) <br> * the whole document * | 1-6,10 | B28B13/06 <br> B65G47/90 |
| Y | | 7-9,11 | |
| Y,D | WO-A-8 904 749 (CHLORIDE SILENT POWER LIMITED) <br> * the whole document * | 1,6-11 | |
| Y | US-A-1 943 483 (W. J. MILLER) <br> * page 4, line 104 - page 5, line 100; figures 8-9A * | 1,6-11 | |
| Y | WO-A-8 904 794 (L. E. TRYGG) <br> * the whole document * | 1,6-11 | |
| Y | EP-A-0 364 832 (BRIDGESTONE CORPORATION) <br> * the whole document * | 1,6-11 | |
| Y | FR-A-2 356 583 (ONODA CEMENT CO. LTD.) <br> * figures 1,3,4,9,10 * | 7-9 | TECHNICAL FIELDS SEARCHED (Int. Cl.5 ) |
| A | FR-A-1 588 641 (MASCHINEN- UND STAHLBAU JULIUS LIPPERT) <br> * the whole document * | | B28B <br> B29C <br> B29H <br> B65G <br> B66C |

The present search report has been drawn up for all claims

| Place of search | Date of completion of the search | Examiner |
|---|---|---|
| THE HAGUE | 14 SEPTEMBER 1992 | GOURIER P.A. |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P0401)